# Europäisches Patentamt

(19) **European Patent Office**

**Office européen des brevets**

(11) Numéro de publication: **0 267 073 B1**

(12) **FASCICULE DE BREVET EUROPEEN**

(45) Date de publication du fascicule du brevet:
16.05.90

(51) Int. Cl.⁵: **B60R 13/06**

(21) Numéro de dépôt: 87402190.0

(22) Date de dépôt: 02.10.87

(54) Dispositif d'étanchéité pour vitre de véhicule automobile.

(30) Priorité: 03.10.86 FR 8613797

(43) Date de publication de la demande:
11.05.88 Bulletin 88/19

(45) Mention de la délivrance du brevet:
16.05.90 Bulletin 90/20

(84) Etats contractants désignés:
BE DE ES GB IT

(56) Documents cités:
EP-A- 0 086 962

PATENT ABSTRACTS OF JAPAN,
vol. 10, no. 336 (M-535)[2392], 14 novembre 1986, page 13 M 535; & JP-A-61 139 515 (KINUGAWA
RUBBER IND CO LTD) 26-02-1986

(73) Titulaire: REGIE NATIONALE DES USINES RENAULT,
Boîte postale 103 8-10 avenue Emile Zola,
F-92109 Boulogne-Billancourt(FR)

(72) Inventeur: Massie, Bernard, 24, Rue d'Alsace,
F-92300 Levallois-Perret(FR)
Inventeur: Le Ba, Fabrice, 207, Rue de la Porte de
Trivaux, F-92140 Clamart(FR)

(74) Mandataire: Chassagnon, Jean Alain et al, 8/10, avenue
Emile Zola, F-92109 Boulogne-Billancourt(FR)

## Description

La présente invention est relative à un dispositif d'étanchéité double du type défini dans le préambule de la revendication 1.

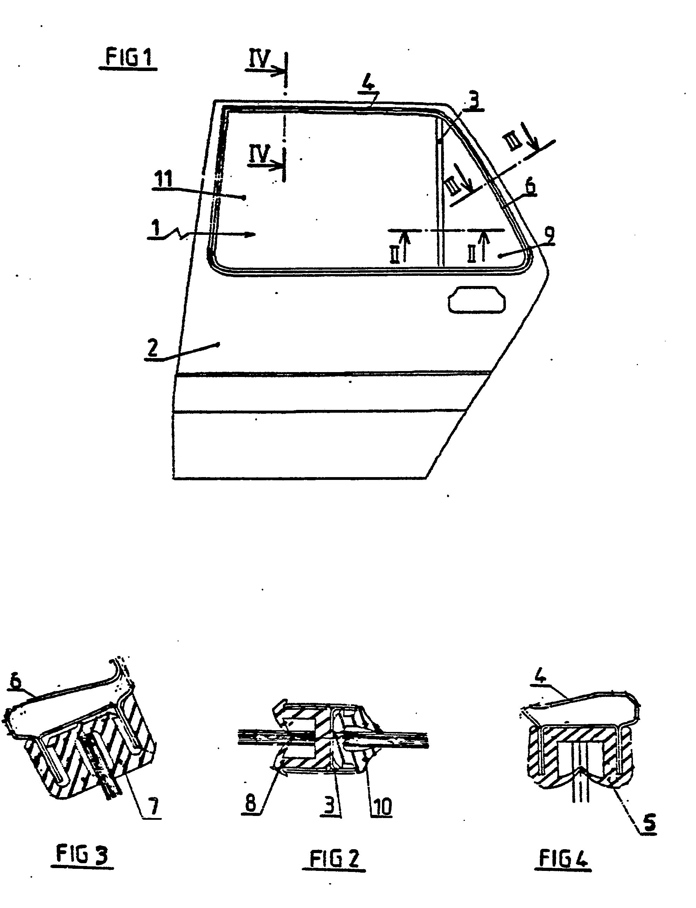

Dans les véhicules automobiles, il arrive fréquemment que sur une même portière on mette côte à côte une vitre fixe et une vitre mobile, séparées par un montant. Pour cela, chacune des vitres a son propre dispositif d'étanchéité, comme on peut le voir sur les figures 1, 2, 3 et 4. Pour cela, la baie 1 de la portière 2 est divisée par un montant 3 comme cela est représenté sur la figure 1. L'étanchéité du côté supérieur 4 est assurée par un joint du type coulisse 5 qui est représenté sur la figure 4. L'étanchéité du côté arrière 6 est assurée par un joint 7 représenté sur la figure 3. L'étanchéité du montant 3 avec la vitre mobile 11 est assurée par un joint du type coulisse 8, et l'étanchéité du montant 3 avec ladite vitre fixe 9 est assurée par un joint 10. L'étanchéité du montant 3 est représenté sur la figure 2.

On remarque que dans ce cas le joint du type coulisse 8 et le joint 10 sont totalement indépendants l'un de l'autre, ce qui présente l'inconvénient d'avoir en plus un dispositif de fixation du joint du type coulisse 8, afin que le mouvement de la vitre mobile 11 n'entraîne pas ce joint du type coulisse 8, ce qui le ferait glisser par rapport à son montant 3.

D'autres dispositifs associent des joints dans d'autres plans comme dans le document JP-A 61 139 515 (JP-A 13 9515/84).

Le but de la présente invention est de proposer un joint monobloc pour montant de vitre mobile et de vitre fixe, qui ne nécessite aucun système de fixation supplémentaire.

Selon l'invention, le dispositif du type défini dans le préambule de la revendication 1 est caractérisé en ce qu'il comporte des moyens empêchant le glissement du joint du type coulisse par rapport au montant, à savoir un élément de tenue extérieure formant avec les joints précités un ensemble monobloc et disposé le long du montant.

Selon un mode de réalisation de l'invention:

– le joint coulisse est constitué de deux éléments solidaires d'une semelle qui est munie de chaque côté d'une lèvre de maintien, l'ensemble venant s'engager à l'intérieur d'un des côtés du montant;

– le joint pour vitre fixe est constitué par une semelle solidaire de deux éléments, l'ensemble venant s'engager à l'intérieur de l'autre côté du montant ;

– le joint coulisse pour vitre mobile étant solidaire du joint pour vitre fixe au moyen d'un seul et même élément de tenue extérieure.

Selon un mode de réalisation de l'invention, l'élément de tenue extérieure comporte une armature métallique.

Selon un mode de réalisation de l'invention, l'armature métallique est débouchante sur l'extérieur afin d'assurer une fonction décorative.

Le dispositif d'étanchéité double et monobloc selon l'invention présente ainsi l'avantage de garantir la position verticale du joint du type coulisse du montant. De ce fait, on supprime tout dispositif supplémentaire de fixation du joint coulisse. On a de plus un ensemble monobloc plus facile à monter en chaîne de fabrication, et ceci avec un prix de revient réduit. Enfin, l'invention permet d'avoir un ensemble moins encombrant et moins lourd, qui sont des arguments déterminants dans la conception des véhicules automobiles modernes.

D'autres caractéristiques et avantages de la présente invention ressortiront de la description qui suit de mode de réalisation donné à titre d'exemple en référence aux dessins annexés sur lesquels :

– la figure 5 est une vue de profil extérieur d'une portière arrière de véhicule automobile équipée du dispositif d'étanchéité selon l'invention;

– la figure 6 est une coupe selon VI-VI de la figure 5 ;

– la figure 7 est une coupe selon VII-VII de la figure 5 ;

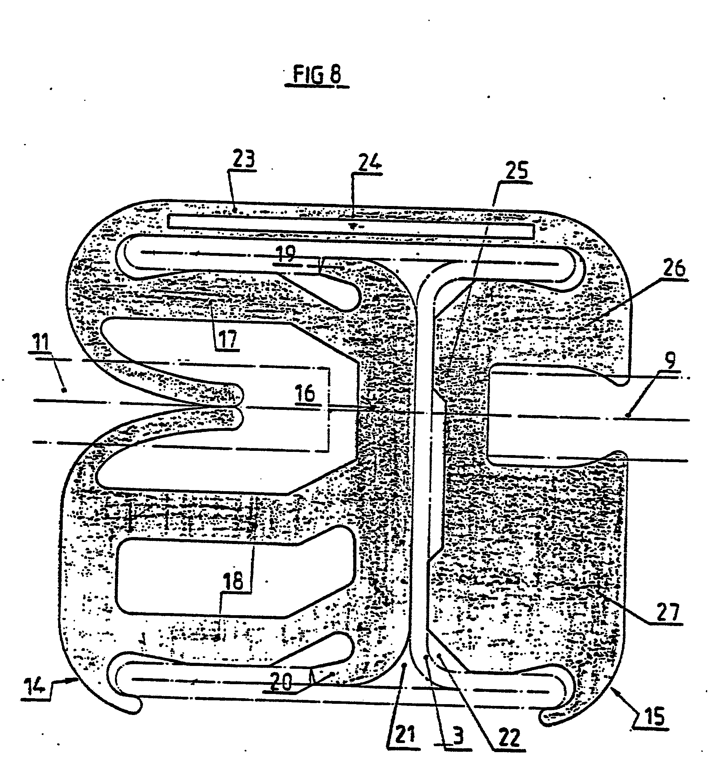

– la figure 8 est une vue identique et à grande échelle à la figure 7.

Le dispositif d'étanchéité selon l'invention comprend un joint coulisse 14 pour vitre mobile 11, et un joint 15 pour vitre fixe 9. Cet ensemble se fixe dans un montant 3 disposé, par exemple, à l'intérieur d'une baie 1 d'une portière 2 située à l'arrière d'un véhicule automobile.

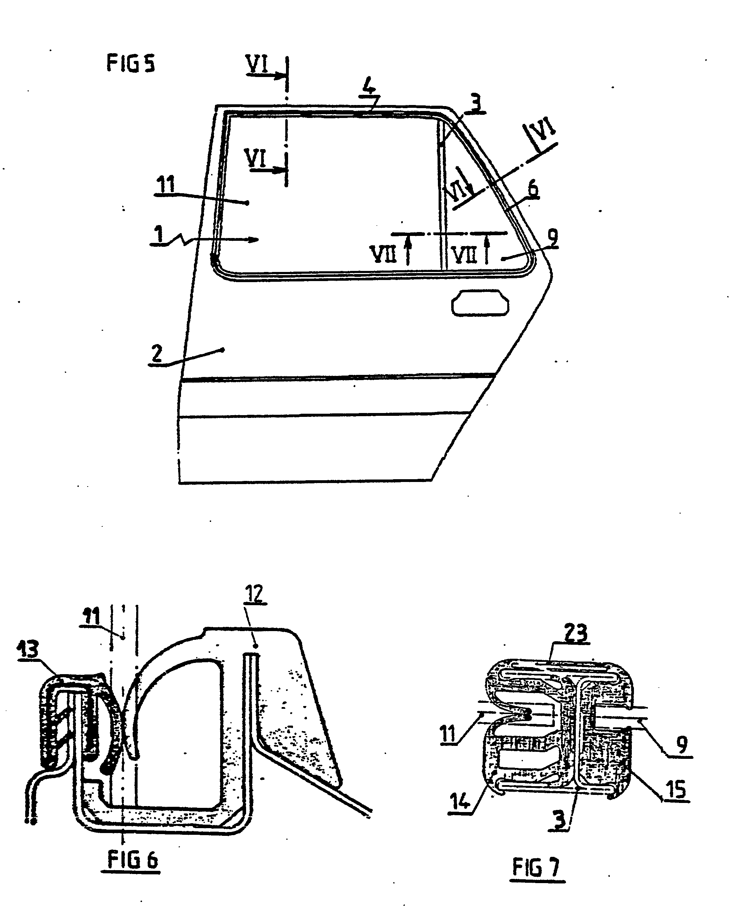

L'étanchéité du côté supérieur 4 et du côté arrière 6 est assurée par le même ensemble du joint comme on peut le voir sur la figure 6, c'est-à-dire avec un joint à lèvre 12 et avec un joint à lèvre 13.

Le joint coulisse 14 pour vitre mobile 11 est solidaire du joint 15 pour vitre fixe 9 au moyen d'un seul et même élément de tenue extérieure 23.

Le joint coulisse 14 est constitué de deux éléments 17 et 18 qui sont solidaires d'une semelle 16. Cette semelle 16 est munie de chaque côté d'une lèvre de maintien 19 et 20. Le joint à coulisse 14 vient s'engager à l'intérieur du côté 21 du montant 3.

Le joint 15 pour vitre fixe 9 est constitué par une semelle 25 qui est solidaire de deux éléments 26 et 27. Ce joint 15 vient s'engager à l'intérieur de l'autre côté 22 due montant 3.

Le joint coulisse 14 pour vitre mobile 11 est solidaire du joint 15 pour vitre fixe 9 au moyen d'un seul et même élément de tenue extérieure 23.

Dans une variante de réalisation de l'invention, l'élément de tenue extérieure comporte une armature métallique 24.

Dans une autre variante de réalisation de l'invention non représentée sur les figures, l'armature métallique 24 est débouchante sur l'extérieur afin d'assurer une fonction décorative.

## Revendications

1. Dispositif d'étanchéité double d'une baie vitrée de portière de véhicule automobile avec une vitre fixe (9) et une vitre mobile (11) disposées côte à côte et séparées par un montant (3), le dispositif comprenant un joint fixe (15) assurant la fixation de la vitre fixe (9) au montant (3) et un joint coulisse (14) le long duquel coulisse la vitre mobile (11), caractérisé en ce qu'il comporte des moyens empêchant le glissement du joint du type coulisse (14) par rapport au montant (3), à savoir un élément de tenue extérieure (23) formant avec les joints précités (15, 14) un ensemble monobloc et disposé le long du montant (3).

2. Dispositif d'étanchéité selon la revendication 1, caractérisé en ce que:

— le joint coulisse (14) est constitué de deux éléments (17) et (18) solidaires d'une semelle (16) munie de chaque côté d'une lèvre de maintien (19) et (20), l'ensemble venant s'engager à l'intérieur d'un côté (21) du montant (3);

— le joint (15) pour vitre fixe (9) est constitué par une semelle (25) solidaire de deux éléments (26) et (27), l'ensemble venant s'engager à l'intérieur de l'autre côté (22) du montant (3);

— le joint coulisse (14) pour vitre mobile (11) étant solidaire du joint (15) pour vitre fixe (9) au moyen d'un seul et même élément de tenue extérieure (23).

3. Dispositif d'étanchéité selon la revendication 2, caractérisé en ce que l'élément de tenue extérieure comporte une armature métallique (24).

4. Dispositif d'étanchéité selon la revendication 3, caractérisé en ce que l'armature métallique (24) est débouchante sur l'extérieur afin d'assurer une fonction décorative.

**Patentansprüche**

1. Abdichtvorrichtung für das Türfenster eines Kraftfahrzeugs mit einer feststehenden Scheibe (9) und einer beweglichen Scheibe (11), die nebeneinander angeordnet sind und durch ein Rahmenteil (3) getrennt sind, wobei die Vorrichtung eine feste Dichtung (15) aufweist zur Halterung der festen Scheibe (9) am Rahmenteil (3) und eine Führungsdichtung (14) aufweist, entlang derer die bewegliche Scheibe (11) gleitet, dadurch gekennzeichnet, daß sie eine Anordnung aufweist, die ein Gleiten der Führungsdichtung (14) bezüglich des Rahmenteils (3) verhindert, nämlich ein äußeres Halteteil (23), das mit den beiden Dichtungen (15, 14) ein einstückiges Bauteil bildet und in Längsrichtung des Rahmenteils (3) verläuft.

2. Abdichtvorrichtung nach Anspruch 1, dadurch gekennzeichnet, daß:

— die Führungsdichtung (14) aus zwei Teilen (17 und 18) besteht, die fest mit einem Stegteil (16) verbunden sind, das auf jeder Seite mit einer Haltelippe (19 und 20) versehen ist, wobei die Anordnung in das Innere der einen Seite des Rahmenteils (3) eingreift;

— die Dichtung (15) für die feststehende Scheibe (9) aus einem Stegteil (25) besteht, das fest mit zwei Teilen (26 und 27) verbunden ist, wobei die Anordnung in das Innere der anderen Seite (22) des Rahmenteils (3) eingreift und

— die Führungsdichtung (14) für die bewegliche Scheibe (11) fest mit der Dichtung (15) für die feststehende Scheibe (9) mittels eines einzigen äußeren Halteteils (23) verbunden ist.

3. Abdichtvorrichtung nach Anspruch 2, dadurch gekennzeichnet, daß das äußere Halteteil eine metallische Verstärkung (24) aufweist.

4. Abdichtvorrichtung nach Anspruch 3, dadurch gekennzeichnet, daß die metallische Verstärkung (24) sich bis nach außen erstreckt, um so eine dekorative Wirkung zu erzielen.

**Claims**

1. A double sealing arrangement for a glazed window opening in a motor vehicle door having a fixed window (9) and a movable window (11) which are disposed side-by-side and separated by an upright (3), the arrangement comprising a fixed seal (15) which provides for fixing of the fixed window (9) to the upright (3) and a groove seal (14) along which the movable window (11) slides characterised in that it comprises means for preventing sliding movement of the seal (14) of groove type with respect to the upright (3), namely an external holding element (23) which with said seals (15, 14) forms a one-piece assembly disposed along the upright (3).

2. A sealing arrangement according to claim 1 characterised in that:

— the groove seal (14) is formed by two elements (17 and 18) which are fixed with respect to a base portion (16) which is provided on each side with a holding lip (19 and 20), the assembly being engaged into the interior of one side (21) of the upright (3);

— the seal (15) for the fixed window (9) is formed by a base portion (25) which is fixed with respect to two elements (26 and 27), the assembly being engaged into the interior of the other side (22) of the upright (3);

— the groove seal (14) for the movable window (11) being fixed with respect to the seal (15) for the fixed window (9) by means of the same single holding element (23).

3. A sealing arrangement according to claim 2 characterised in that the external holding element comprises a metal fitting (24).

4. A sealing arrangement according to claim 3 characterised in that the metal fitting (24) is exposed to the exterior in order to provide a decorative function.

FIG 1

FIG 3

FIG 2

FIG 4

FIG 5

FIG 6

FIG 7

FIG 8